# EUROPÄISCHE PATENTSCHRIFT

(11) **EP 0 754 130 B1**
(45) Veröffentlichungstag und Bekanntmachung des Hinweises auf die Patenterteilung: **12.01.2000**
(21) Anmeldenummer: 96905834.6
(22) Anmeldetag: 01.03.1996
(51) Int. Cl.: B60J 7/185

(54) **VERRIEGELUNGSVORRICHTUNG ZUM LÖSBAREN BEFESTIGEN EINES FAHRZEUGDACHES AN EINEM UNBEWEGLICHEN KAROSSERIETEIL**
LOCKING DEVICE FOR DETACHABLY SECURING A VEHICLE ROOF TO AN IMMOVABLE PART OF THE CAR BODY
DISPOSITIF DE VERROUILLAGE SERVANT A ASSUJETTIR DE MANIERE AMOVIBLE LE TOIT D'UN VEHICULE A UNE PARTIE FIXE DE LA CARROSSERIE

(30) Priorität: 03.03.1995 DE 19507431
(43) Veröffentlichungstag der Anmeldung: 22.01.1997
(73) Patentinhaber: DaimlerChrysler AG, 70567 Stuttgart (DE); Lunke & Sohn Aktiengesellschaft, 58455 Witten/Ruhr (DE)
(72) Erfinder: SCHAIBLE, Kurt, D-71134 Aidlingen (DE); SCHULER, Eckart, D-71065 Sindelfingen (DE); SCHENK, Bernhard, D-71034 Böblingen (DE); MERTIN, Ralf, D-58313 Herdecke (DE); ELLENBECK, Günter, D-45883 Gelsenkirchen (DE); SEEL, Holger, D-71134 Aidlingen (DE)
(86) Internationale Anmeldenummer: EP9600841
(87) Internationale Veröffentlichungsnummer: WO9627509

(56) Entgegenhaltungen:
- EP-A- 0 492 006
- DE-C- 3 940 839
- US-A- 5 284 378

## Beschreibung

Die Erfindung bezieht sich auf eine Verriegelungsvorrichtung zum lösbaren Befestigen eines Fahrzeugdaches an einem unbeweglichen Karosserieteil der im Oberbegriff des Hauptanspruches angegebenen Art.

Eine derartige Verriegelungsvorrichtung ist z.B. aus der DE 15 05 721 C3 bereits als bekannt zu entnehmen, wobei ein vorderer Abschluß eines Klappverdecks durch zwei Hakenverschlüsse mit einem Rahmen der Windschutzscheibe verriegelbar ist. Die Verschlußhaken dieser Hakenverschlüsse sind seitlich am Rahmen der Windschutzscheibe angeordnet, wobei sie am Ende eines wippenartig gelagerten Hebels angelenkt sind, an dessen entgegengesetztem Ende ein zugeordneter Arbeitszylinder angreift. Im Anordnungsbereich der Verschlußhaken muß bei dieser bekannten Verriegelungsvorrichtung ein relativ großer Einbauraum vorhanden sein, der konstruktiv nicht bei allen Fahrzeugkonzepten mit abnehmbarem bzw. zurückzuklappendem Dach zur Verfügung stehen wird.

Ferner ist aus der DE 39 40 839 C1 eine Verriegelungsvorrichtung für ein Verdeck bekannt, die zwei vordere Verdeckverschlüsse umfaßt, die mittels eines zentralen Handgriffes unter Verbindung durch Treibstangen ver- und entriegelbar sind. Dabei werden über die Treibstangen gabelförmige Verriegelungshaken seitlich verschoben, wobei sie ver- oder entriegelnd mit Verschlußbolzen zusammenwirken, die sich in Fahrzeuglängsrichtung erstrecken und am Rahmen der Windschutzscheibe angeordnet sind.

Da die Zentrier- und Verriegelungselemente vom vorderen Dachbereich nach unten abragen und in Öffnungen an der Oberseite des Rahmens der Windschutzscheibe eintauchen, ist der Platzbedarf zum Anordnen der Verschlußteile sowohl in Dickenrichtung des Daches selbst als auch am Rahmen der Windschutzscheibe beträchtlich. Außerdem sind die gabelförmigem Verriegelungshaken gleitend gelagert und sind daher im Unterschied zu Drehgelenken wesentlich wartungsintensiver.

Der Erfindung liegt die Aufgabe zugrunde, eine Verriegelungsvorrichtung der gattungsgemäßen Art dahingehend weiterzuentwickeln, daß eine platzsparende, insbesondere flache Gestaltung des den Verschlußhaken aufweisenden Verbindungsgliedes leichter möglich wird.

Die erfindungsgemäße Lösung dieser Aufgabe ergibt sich aus den Merkmalen des Hauptanspruchs.

Aus den übrigen Ansprüchen sind vorteilhafte Ausgestaltungen der Erfindung zu entnehmen.

Durch die Zwischenlagerung des Verschlußhakens in seinem Mittelbereich kann die Querverlagerung des Hakenendes in Abhängigkeit von einem kurzen Längsvorschub des Verschlußhakens erfolgen, wodurch der Vorschubweg des Verschlußhakens im Verhältnis zum Zuziehweg insgesamt relativ kurz bemessen werden kann. Zudem kann ein relativ kurzer schwenkangetriebener Hebel zur Ver- und Entriegelung des Verschlußhakens genutzt werden, wobei der Hebel nur einen Hebelarm aufweisen muß. Auf die Querverlagerung des Hakenendes steuernde Mittel mit erheblichem Platzbedarf wie Schraubenzugfedern oder dgl. kann vollständig verzichtet werden.

Nachfolgend ist ein Ausführungsbeispiel der Erfindung anhand einer zeichnerischen Darstellung näher erläutert.

In dieser Darstellung zeigen:
- Fig. 1: eine erfindungsgemäße Verriegelungsvorrichtung in ihrer bei geschlossenem Fahrzeugdach vorliegenden Verriegelungsstellung,
- Fig. 2: eine Draufsicht auf die dachseitig angeordneten Teile der Verriegelungsvorrichtung, und
- Fig. 3: die Verbindungsglieder der Verriegelungsvorrichtung auf der linken Dachseite.

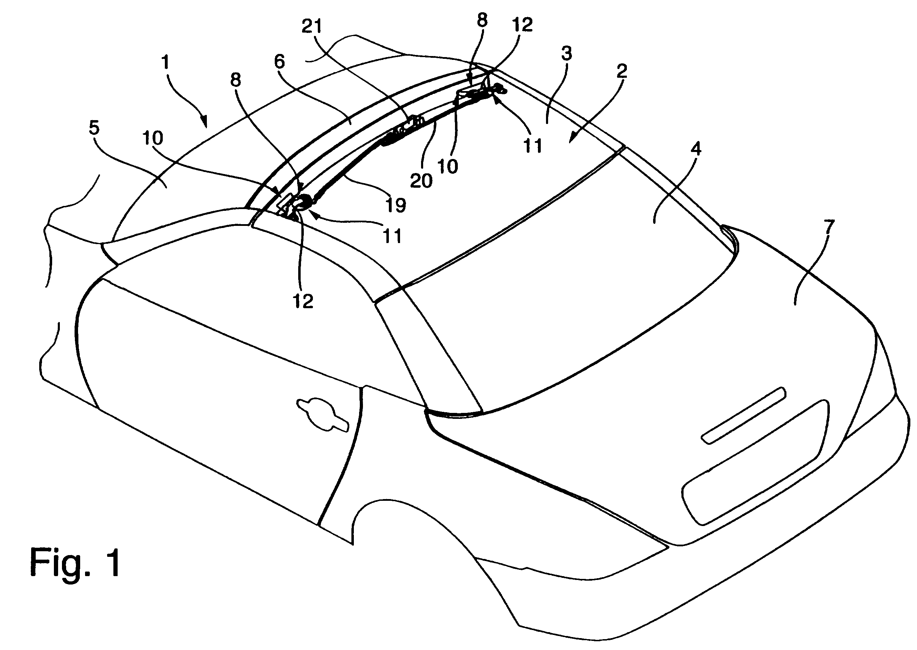

Ein in Fig. 1 bereichsweise gezeigtes Cabriolet 1 weist ein Klappdach 2 auf, das als zweiteiliges Festdach ausgebildet ist. Das Klappdach 2 umfaßt als Hauptteile ein vorderes Dachteil 3 sowie ein das Rückfenster aufweisendes hinteres Dachteil 4, wobei die Dachteile 3 und 4 gelenkig miteinander verbunden sind. In der gezeigten Stellung ist das Klappdach 2 geschlossen und überdeckt den Innenraum des zweisitzigen Cabriolets 1 bis zu einem oberhalb der Windschutzscheibe 5 verlaufenden Rahmenprofil 6 der Karosserie. Hinter dem geschlossenen Klappdach 2 befindet sich ein Heckstauraum, der von einem Heckdeckel 7 überdeckt wird. Zum Öffnen des Daches 2 läßt sich der Heckdeckel 7 um eine im Bereich seines hinteren Stoßfängers verlaufende Fahrzeugquerachse nach hinten hochklappen, wonach das Klappdach 2 nach hinten in den Heckstauraum hineingeklappt werden kann. Hierzu ist das hintere Dachteil 4 um eine horizontale Fahrzeugquerachse schwenkbar gelagert, die in einem Abstand unterhalb der unteren Dachpfostenenden des Dachteils 4 verläuft. Das am Dachteil 4 angelenkte und somit mitgenommene Dachteil 3 wird dabei auf die nach oben gewandte Seite des Dachteils 4 heruntergeklappt, wonach beide Dachteile 3 und 4 im Heckstauraum versenkt sind, so daß der Heckdeckel 7 wieder zugeklappt werden kann.

Um beim Öffnen und Schließen des Klappdaches 2 eine zwangsläufige Bewegungssteuerung des vorderen Dachteils 3 gegenüber dem angetriebenen hinteren Dachteil 4 zu erreichen, bilden die seitlichen Dachpfosten des hinteren Dachteils 4 gemeinsam mit nicht gezeigten Hauptlenkern ein parallelogrammartiges Gestänge, mit dem das vordere Dachteil 3 im Sinne einer Parallelverschiebung geführt ist. Infolge des hierdurch erzwungenen Bewegungsablaufs bewegt sich das vordere Dachteil 3 beim Schießen des Klappdaches 2 zuletzt im Sinne einer weitgehend horizontalen Verschiebebewegung auf die rückwärtige Schmalseite des Rahmenprofils 6 zu. Zur Abdichtung des vorderen Dachteiles 3 gegenüber dem Rahmenprofil 6 ist eine nicht gezeigte Dichtung vorgesehen, die bei geschlossenem Dach 2 zwischen der Vorderseite des Dachteiles 3 und der davorliegenden Schmalseite des Rahmenprofils 6 zusammengedrückt wird.

Damit sich das Klappdach 2 in seiner letzten Schließbewegungsphase gegen die federelastischen Dichtungskräfte zuverlässig schließen läßt, ist eine Verriegelungsvorrichtung zum Zuziehen des vorderen Dachteils 3 und Befestigen des Dachteils 3 hinter dem Rahmenprofil 6 vorgesehen. Diese Verriegelungsvorrichtung umfaßt zwei als Verbindungsglieder dienende Hakenverschlüsse 8, die jeweils nahe dem zugeordneten seitlichen Dachrand zwischen Rahmenprofil 6 und Vorderseite des Dachteils 3 angeordnet sind. Die Hakenverschlüsse 8 sind bezogen auf die Längsmittelebene des Cabriolets 1 spiegelsymmetrisch angeordnet und ausgebildet, so daß sie aus Vereinfachungsgründen mit gleichen Bezugszeichen versehen wurden. Jeder der beiden Hakenverschlüsse 8 weist einen Verschlußzapfen 9 auf, der etwa senkrecht zwischen einem oberen und unteren Deckblech eines zugehörigen Aufnahmegehäuses 10 gehalten ist, wobei das Aufnahmegehäuse 10 unbeweglich am Rahmenprofil 6 befestigt ist.

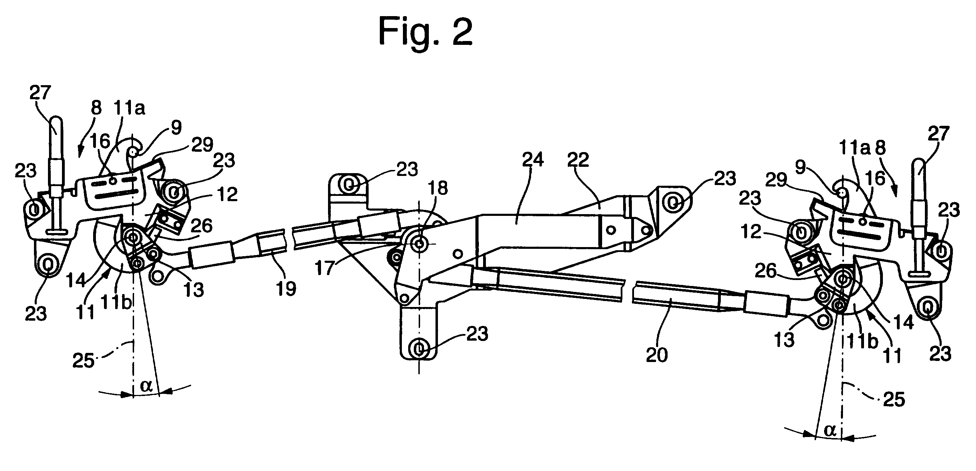

Wie in Verbindung mit Fig. 2 deutlicher zu erkennen ist, werden die Verschlußzapfen 9 bei geschlossenem Klappdach 2 vom Hakenende 11a eines zugeordneten Verschlußhakens 11 hintergriffen, der unter etwa horizontaler Erstreckung aus seinem am Dachteil 3 befestigten Verschlußgehäuse 12 heraussteht. Dabei ist die hintergreifende Schmalseite des Hakenendes 11a im wesentlichen unter gleichem Radius gekrümmt wie die hintergriffene Umfangshälfte des Zapfens 9, wodurch beide formschlüssig zusammenwirken.

Der Verschlußhaken 11 ist aus parallelflachem Plattenmaterial gefertigt und weist somit eine entsprechend geringe Dicke auf. Hierdurch konnte auch das vom Verschlußhaken 11 durchsetzte Gehäuse 12 entsprechend flach gestaltet werden. Um eine Längs- und Querverlagerung des Verschlußhakens 11 beim Verriegelungs- und Entriegelungsvorgang zu erreichen, ist dieser im Mittelbereich und im hinteren Endbereich 11b bewegungsgesteuert und im Endbereich 11b schwenkangetrieben. Hierzu ist im hinteren Bereich des Verschlußgehäuses 12 ein Hebel 13 um eine gehäusefeste Achse 14 schwenkbar gelagert, wobei sich der Hebel 13 schräg nach hinten erstreckt. Am freien Ende des Hebels 13 ist das hintere Ende des aus dem Verschlußgehäuse 12 herausstehenden Endbereiches 11b angelenkt, der hierzu etwa viertelkreisförmig in Richtung der Dachmitte gekrümmt ist.

Hierdurch wird das hintere Ende des Verschlußhakens 11 auf einem Kreisbahnabschnitt um die Achse 14 geführt.

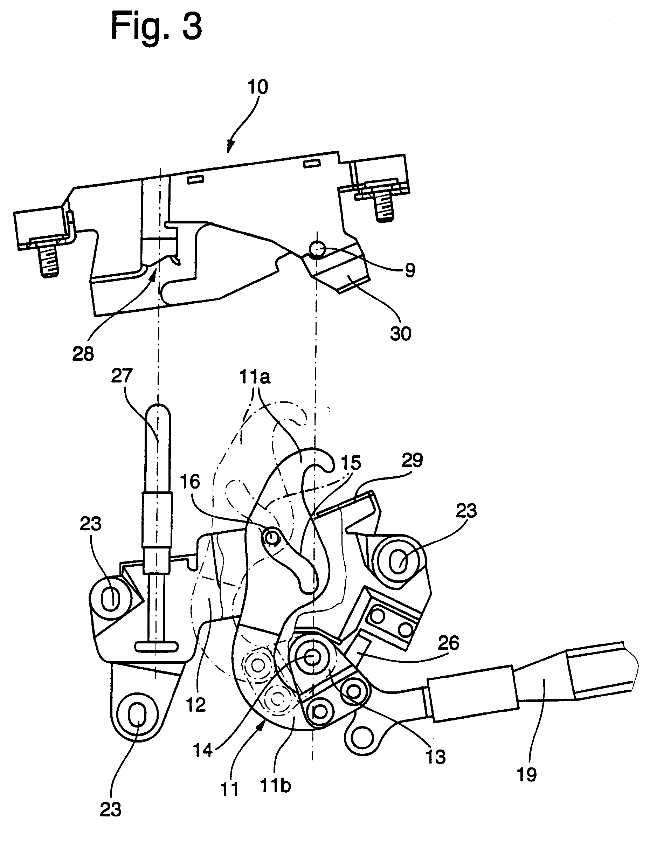

Zur Bewegungssteuerung des Verschlußhakens 11 ist darüber hinaus aus seinem Mittelbereich eine Langlochführung 15 ausgespart, die sich unter etwa S-förmiger Krümmung in Längenrichtung des Verschlußhakens 11 erstreckt. Diese Langlochführung 15 ist von einem zugehörigen Führungsbolzen 16 durchdrungen, der das Verschlußgehäuse 12 quer durchsetzt, und fest mit diesem verbunden ist. Wie in Fig. 3 bei aufgebrochenem Verschlußgehäuse 12 zu sehen ist, läßt sich der Verschlußhaken 11 aus seiner mit durchgehender Linie gezeichneten Verriegelungsstellung durch Längsverschieben unter Führung durch die relativ zum Führungsbolzen 16 nach vorn verschobene Langlochführung 15 seitlich nach außen verlagern, wodurch das Hakenende 11a in die mit unterbrochenen Linien angedeutete, ausgehakte Entriegelungsstellung gelangt.

Damit die Verschlußhaken 11 auf beiden Dachseiten synchron zwischen ihrer Ver- und Entriegelungsstellung verschoben werden, ist im Mittelbereich des vorderen Dachteils 3 zwischen den seitlichen Verschlußgehäusen 12 ein zweiarmiger Drehhebel 17 um eine vertikale Achse 18 dachfest gelagert, dessen Enden jeweils über eine Treibstange 19 bzw. 20 mit dem zugeordneten Hebel 13 ihres Verschlußhakens 11 bewegungsgekoppelt sind. Die Hebellängen des Drehhebels 17 stimmen dabei im wesentlichen mit denen der Hebel 13 überein. Zum Schwenkantrieb des Drehhebels 17 ist hier ein Hydraulikzylinder 21 vorgesehen. Alternativ wäre jedoch auch eine manuelle Betätigung über einen drehfest mit dem Drehhebel 17 verbundenen Griff denkbar.

Um eine exakte Positionierung des Drehhebels 17 am Dachteil 3 zu ermöglichen, ist der Drehhebel 17 über die Achse 18 an einem dreiarmigen Tragblech 22 gelagert, dessen Arme in ihrem Endbereich jeweils ein Langloch 23 zur verstellbaren Schraubbefestigung am Dachteil 3 aufweisen. Zur stabileren Lagerung der Achse 18 ist das Tragblech 22 durch ein Deckblech 24 verstärkt, das den Schwenkfreiraum für den Drehhebel 17 und den Anordnungsraum für den Hydraulikzylinder 21 freilassend mit dem Tragblech 22 vernietet ist. Auch die Verschlußgehäuse 12 weisen jeweils an drei voneinander beabstandeten Eckbereichen ein Langloch 23 auf, wodurch sie über einen entsprechenden Verstellbereich am Dachteil 3 schraubbefestigbar sind.

Damit die Hakenverschlüsse 8 ohne axiale Haltekräfte ihrer Treibstange 19 bzw. 20 stabil in ihrer Verriegelungsstellung gemäß Fig. 2 gehalten werden, befindet sich die Anlenkung zwischen Endbereich 11b und Hebel 13 in einer Übertotpunktstellung bezogen auf die Wirkungslinie 25 durch den Verschlußzapfen 9 und die Achse 14. Die Übertotpunktstellung ist auf einen Winkel α von etwa 10° begrenzt, da der Hebel 13 in dieser Stellung an einem gehäusefesten Anschlag 26 abgestützt ist. Der Gesamtschwenkwinkel des Hebels 13 bis in seine Übertotpunktstellung beträgt ca. 90 Grad.

Damit die Hebel 13 beider Verschlußhaken 11 ihre Übertotpunktstellung zuverlässig einnehmen können, steht in einem seitlichen Abstand zum zugeordneten Verschlußhaken 11 ein Zentrierzapfen 27 vom Verschlußgehäuse 12 nach vorn ab, der beim Schließen des Klappdaches 2 in eine zugehörige Zentrieröffnung 28 des Aufnahmegehäuses 10 eintaucht. Die Zentrierzapfen 27 verjüngen sich in Richtung ihres freien Endbereichs durch eine konische Abstufung von einem größeren auf einen kleineren Durchmesser, wobei ihre Zentrieröffnungen 28 über ihre Länge an den Eingriffsquerschnitt der Zentrierzapfen 27 angepaßt sind. Durch das weitgehend exakte Positionieren der Verschlußgehäuse 12 relativ zu ihrem Aufnahmegehäuse 10 mittels der Zentrierzapfen 27 gelangen die Hakenenden 11a beim schließen des Dachteils 3 an ihrem Verschlußzapfen 9 vorbei, wodurch sie ihren Zentrierzapfen 27 beim anschließenden Verriegelungsvorschub zuverlässig fangen bzw. hintergreifen. Durch den Verriegelungsvorschub der Verschlußhaken 11 relativ zu ihrem Verschlußgehäuse 12 nach hinten wird das Klappdach 2 gegen die Dichtungskräfte zugezogen und über die Zentrierzapfen 27 exakt zum Rahmenprofil 6 ausgerichtet bzw. positioniert. Aufgrund des formschlüssigen Eingriffs der Zentrierzapfen 27 in ihre Zentrieröffnung 28 wird das Dachteil 3 vorn in seiner Abdeckebene abgestützt, so daß die in einer horizontalen Ebene angeordneten Verschlußhaken 11 keine Gewichtskräfte des Klappdaches 2 aufnehmen müssen.

Seitlich dem Hakenende 11a gegenüberliegend weisen die Verschlußgehäuse 12 an ihrer vorderen Schmalseite eine schräggestellte Anschlagfläche 29 auf, die bei geschlossenem Klappdach 2 gegen einen Gummipuffer 30 des zugehörigen Aufnahmegehäuses 10 gezogen wird. Hierdurch kann das Auftreten von Klappergeräuschen im Fahrbetrieb verhindert werden.

## Patentansprüche

1. Verriegelungsvorrichtung zum lösbaren Befestigen eines Fahrzeugdaches (2) an einem unbeweglichen Karosserieteil (6) mit mindestens einem Hakenverschluß (8), dessen zusammenwirkende Verbindungsglieder am Fahrzeugdach (2) und am Karosserieteil (6) angeordnet sind, wobei eines der Verbindungsglieder ein Verschlußhaken (11) und das andere Verbindungsglied ein vom Verschlußhaken (11) zu hintergreifender Verschlußzapfen (9) sind, mit einer Anlenkung des zum Hakenende des Verschlußhakens (11) entgegengesetzten Endes des Verschlußhakens (11) am Ende eines schwenkanzutreibenden Hebels (13), durch dessen richtungsumzukehrende Schwenkbewegung der Verschlußhaken (11) zwischen seiner Entriegelungs- und seiner Verriegelungsstellung in seiner Längsrichtung verlagerbar ist, mit einer Querverlagerung des Hakenendes während der Längsverlagerung des Verschlußhakens (11), durch die das Hakenende zwischen seiner ein- und ausgehakten Stellung bewegt ist, wobei die Querverlagerung des Hakenendes steuernde Mittel vorgesehen sind, und mit zusammenwirkenden Positioniermitteln (27 und 28), die am Fahrzeugdach (2) und Karosserieteil (6) angeordnet sind,
**dadurch gekennzeichnet**,
daß die Querverlagerung des Hakenendes (11a) durch eine Schiebeführung des Verschlußhakens (11) gesteuert ist, mittels welcher der Verschlußhaken (11) zwischen seinen Endbereichen gelagert ist, wobei der Verschlußhaken (11) entlang einer Führungsbahn (Langlochführung 15) schiebegeführt ist, die über ihre Längenerstreckung gekrümmt verläuft und aus dem Verschlußhaken (11) ausgespart ist, wobei der Hohlquerschnitt der Führungsbahn (Langlochführung 15) von einem relativunbeweglich gehaltenen Führungsbolzen (16) durchsetzt ist.

2. Verriegelungsvorrichtung nach Anspruch 1,
**dadurch gekennzeichnet**,
daß der schwenkanzutreibende Hebel (13) um eine Schwenkachse (14) bewegbar ist, die bei verriegeltem Hakenverschluß (8) gesehen nahe der Verbindungslinie zwischen dem Hakenende (11a) und dem angelenkten Ende (11b) des Verschlußhakens (11) angeordnet ist.

3. Verriegelungsvorrichtung nach Anspruch 2,
**dadurch gekennzeichnet**,
daß der Hebel (13) über einen etwa rechten Winkel richtungsumkehrbar schwenkangetrieben ist.

4. Verriegelungsvorrichtung nach Anspruch 2,
**dadurch gekennzeichnet**,
daß das angelenkte Ende des Verschlußhakens (11) bezogen auf die Wirkungslinie (25) durch die Schwenkachse (14) und den Verschlußzapfen (9) in eine Übertotpunktstellung verlagerbar ist.

5. Verriegelungsvorrichtung nach Anspruch 1,
**dadurch gekennzeichnet**,
daß die Vorrichtung zwei Hakenverschlüsse (8) umfaßt, die in einem Abstand voneinander angeordnet sind und deren Verschlußhaken (11) über eine zentral angeordnete Drehmechanik (Drehhebel 17) synchron ver- und entriegelbar sind.

6. Verriegelungsvorrichtung nach Anspruch 5,
**dadurch gekennzeichnet**,
daß die an ihrem Verschlußhaken (11) angelenkten Hebel (13) jeweils über eine Treibstange (19 bzw. 20) mit einem zugeordneten Hebelarm eines zweiarmigen Drehhebels (17) bewegungsgekoppelt sind.

7. Verriegelungsvorrichtung nach Anspruch 5,
**dadurch gekennzeichnet**,
daß die Verschlußhaken (11) an jeweils einem Verschlußgehäuse (12) gelagert sind, und daß von den Verschlußgehäusen (12) jeweils ein relativunbeweglicher Zentrierzapten (27) absteht, der beim Schließen des Daches (Klappdaches 2) paßgenau in eine gegenüberliegende Zentrieröffnung (28) eingreift, wobei die Zentrieröffnung (28) in einem Aufnahmegehäuse (10) angeordnet ist, das auch den Verschlußzapfen (9) des zugeordneten Verschlußhakens (11) trägt.

## Claims

1. A latching mechanism for detachably securing a vehicle roof (2) to an immobile part of the body (6) having at least one hook catch (8), the co-operating connecting members thereof being arranged on the vehicle roof (2) and on the body part (6), wherein one of the connecting members is a latch hook (11) and the other connecting member is a latch pin (9) which engages behind the catch hook (11), having a linkage of the end of the catch hook (11) opposite the hook end of the catch hook (11) at the end of a swivel-operated lever (13), the reversible swivel action of which allows the latch hook (11) to be displaced in the longitudinal direction thereof between its unlatched and its latched position, the hook end being transversely displaced as the latch hook (11) is longitudinally displaced displacing the hook end between its hooked and unhooked position, means being provided to control the transverse displacement of the hook end, and having co-operating positioning means (27 and 28) arranged on the vehicle roof (2) and body part (6),
**characterised in that**
the transverse displacement of the hook end (11a) is controlled by a slide guide of the latch hook (11), by means of which the latch hook (11) is mounted between its end regions, the latch hook (11) being slidably guided along a guide track (slot guide 15), which runs in a curved arrangement along its longitudinal extension and is cut out from the latch hook (11), the hollow cross-section of the guide track (slot guide 15) having inserted therethrough a guide pin (16) which is retained immobile relative thereto.

2. A latching mechanism as claimed in claim 1,
**characterised in that**
the swivel-operated lever (13) can be displaced about a swivel shaft (14), which is arranged close to the connecting line between the hook end (11a) and the articulated end (11b) of the latch hook (11) when the hook catch (8) is latched.

3. A latching mechanism as claimed in claim 2,
**characterised in that**
the lever (13) is reversibly driven in a swivelling action substantially across a right angle.

4. A latching mechanism as claimed in claim 2,
**characterised in that**
the articulated end of the latch hook (11) can be displaced relative to the line of action (25) into a top dead centre position by means of the swivel shaft (14) and the latch pin (9).

5. A mechanism as claimed in claim 1,
**characterised in that**
the device has two hook catches (8) arranged at a distance apart from one another, the latch hooks (11) of which can be synchronously latched and unlatched by means of a centrally positioned swivel mechanism (swivel lever 17).

6. A latching mechanism as claimed in claim 5,
**characterised in that**
the levers (13) articulated on their latch hooks (11) are respectively coupled with a co-operating lever arm of a dual-arm swivel lever (17) during displacement by means of a connecting rod (19 or 20).

7. A latching mechanism as claimed in claim 5,
**characterised in that**
each of the latch hooks (11) is mounted on a latch housing (12) and that a respective centring pin (27) immobile relative thereto stands out from the latch housings (12) and, when the roof (folding roof 2) is closed, locates in an exact fit in an oppositely lying centring orifice (28), the centring orifice (28) being arranged in a housing (10), which also bears the latch pin (9) of the co-operating latch hook (11).

## Revendications

1. Dispositif de verrouillage servant à assujettir de manière amovible le toit (2) d'un véhicule à une partie fixe (6) de la carrosserie, comprenant au moins une fermeture à crochet (8) dont les organes de liaison coopérants sont disposés sur le toit (2) du véhicule et sur la partie (6) de la carrosserie, l'un des organes de liaison étant un crochet de fermeture (11) et l'autre organe de liaison étant une cheville de fermeture (9) derrière laquelle le crochet (11) est destiné à s'accrocher, l'extrémité de crochet (11) opposée à l'extrémité d'accrochage étant reliée de façon articulée à l'extrémité d'un lévier (13) devant être animé d'un pivotement dans un sens ou dans l'autre pour déplacer le crochet (11) dans sa direction longitudinale entre ses positions de déverrouillage et de verrouillage, le déplacement longitudinal du crochet (11) s'accompagnant d'un déplacement transversal de son extrémité d'accrochage, par lequel celle-ci est déplacée entre sa position accrochée et sa position décrochée, avec prévision de moyens contrôlant le déplacement transversal de l'extrémité d'accrochage, le dispositif de verrouillage comprenant en outre des moyens coopérants de positionnement (27 et 28) disposés sur le toit (2) du véhicule et sur la partie fixe (6) de la carrosserie,
caractérisé en ce que
le déplacement transversal de l'extrémité d'accrochage (11a) est contrôlé par un guidage à coulisse du crochet de fermeture (11), guidage au moyen duquel le crochet (11) est monté entre ses parties terminales, le crochet (11) étant guidé en coulissement le long d'une trajectoire de guidage (trou en fente 15) possédant une allure courbe dans le sens de sa longueur et ménagée dans le crochet (11), la section creuse de la trajectoire de guidage (trou en fente 15) étant traversée d'un tenon de guidage (16) maintenu immobile par rapport à elle.

2. Dispositif de verrouillage selon la revendication 1, caractérisé en ce que le levier (13) devant être animé d'un pivotement, est mobile autour d'un axe de pivotement (14) qui, lorsque la fermeture à crochet (8) est fermée, est situé près de la ligne reliant l'extrémité d'accrochage (11a) et l'extrémité de liaison articulée (11b) du crochet de fermeture (11).

3. Dispositif de verrouillage selon la revendication 2, caractérisé en ce que le levier (13) est animé d'un pivotement dans un sens ou dans l'autre dans une plage angulaire correspondant à peu près à un angle droit.

4. Dispositif de verrouillage selon la revendication 2, caractérisé en ce que l'extrémité de liaison articulée du crochet de fermeture (11) est déplaçable à une position au-delà d'un point mort par rapport à une ligne d'action (25) passant par l'axe de pivotement (14) et la cheville de fermeture (9).

5. Dispositif de verrouillage selon la revendication 1, caractérisé en ce qu'il comprend deux fermetures à crochet (8) placées à distance l'une de l'autre et dont les crochets (11) peuvent être verrouillés et déverrouillés en synchronisme au moyen d'un mécanisme de rotation (levier tournant 17) agencé de façon centrale.

6. Dispositif de verrouillage selon la revendication 5, caractérisé en ce que les leviers (13), articulés à leurs crochets de fermeture (11) respectifs, sont chacun couplés cinématiquement, par l'intermédiaire d'une barre de manoeuvre (19 ou 20), à un bras coordonné d'un levier tournant (17) à deux bras.

7. Dispositif de verrouillage selon la revendication 5, caractérisé en ce que les crochets de fermeture (11) sont montés chacun sur un boîtier de fermeture (12) et que, de chacun de ces boîtiers de fermeture (12), dépasse une tige de centrage (27) immobile par rapport au boîtier et qui pénètre lors de la fermeture du toit (toit rabattable 2) avec ajustement dans une ouverture de centrage (28) située en face d'elle, l'ouverture de centrage (28) étant ménagée dans un boîtier récepteur (10) qui porte également la cheville de fermeture (9) du crochet de fermeture (11) coordonné.
